# EUROPEAN PATENT SPECIFICATION

(11) **EP 3 111 001 B1**
(45) Date of publication and mention of the grant of the patent: **01.11.2017**
(21) Application number: 14709217.5
(22) Date of filing: 28.02.2014
(51) Int. Cl.: D06F 58/24, F16K 15/06

(54) **CHECK VALVE ASSEMBLY WITH IMPROVED SAFETY FOR USE IN A LAUNDRY DRYER**
RÜCKSCHLAGVENTILANORDNUNG MIT VERBESSERTER SICHERHEIT ZUR VERWENDUNG IN EINEM WÄSCHETROCKNER
ENSEMBLE SOUPAPE DE RETENUE AVEC UNE SÉCURITÉ AMÉLIORÉE DESTINÉ À ÊTRE UTILISÉ DANS UN SÈCHE-LINGE

(43) Date of publication of application: 04.01.2017
(73) Proprietor: Arçelik Anonim Sirketi, 34950 Istanbul (TR)
(72) Inventor: CINAR, Levent, 34950 Istanbul (TR); BEDIR, Ersin, 34950 Istanbul (TR); ERCAN, Onur, 34950 Istanbul (TR); METIN, Ahmet, 34950 Istanbul (TR); BULUT, Levent, 34950 Istanbul (TR)
(86) International application number: PCT/EP2014/053950
(87) International publication number: WO 2015/127986

(56) References cited:
- EP-A1- 1 914 340
- EP-A1- 2 568 076
- EP-A1- 2 574 696

## Description

The present invention relates to a laundry dryer, in particular a domestic laundry dryer which has a removable condensate water tank. The present invention particularly relates to a check valve assembly for use at an interface between a condensate water duct and a removable condensate water tank of the laundry dryer.

Several techniques have been devised for drying wet laundry. In particular, laundry dryers such as heat-pump type laundry dryers and condenser type laundry dryers are well known in the art. A laundry dryer comprises a drum for receiving clothes to be dried and a process air circuit for conveying process air through the drum by means of a fan in order to dry the clothes, a first heat exchanger arranged to heat the process air at an upstream side of the drum and a second heat exchanger arranged to cool and dehumidify the process air at a downstream side of the drum. As the heated process air strikes the clothes inside the drum, the thermal energy of the process air is partly transferred to the wet clothes and in turn, the humidity in the clothes diffuses into the process air. By means of the fan, the humid process air is drawn out of the drum into the duct where the second heat exchanger cools down the process air so that the humidity undergoes condensation. Subsequently, the condensate water is drained via the condensate water duct into the tank. The tank is usually removably arranged into the laundry dryer. After completion of the drying process, the user removes the tank, discharges the collected condensate water and inserts the tank back into its place.

To avoid spillage of the water, the tank is usually provided with a safety valve. When the tank is removed from the laundry dryer, a shaft of the safety valve moves from an open state to a close state and when the tank is inserted back into the laundry dryer, the shaft of the safety valve moves from the closed state to the open state.

EP 1 914 340 A1 discloses a laundry dryer which comprises a condensate drain circuit and an extractable container. The condensate drain circuit has a terminal portion which is connected to a first safety valve. The extractable container has an inlet which is connected to a second safety valve. The first safety valve and the second safety valve are detachably coupled to each other.

It is an important requirement that the safety valve is absolutely leak-tight. In general, a leakage may cause damages to the laundry dryer. Moreover, even a small leakage may cause malfunctioning of the sensitive electrical parts, including sensors arranged to measure a level of the condensate water. In the above-mentioned safety valve usually a gasket, in particular an O-ring is biased via a coil spring to an inlet so as to attain a leak-tight assembly. Therefore, the spring must have a sufficient stiffness to secure the leak-tightness of the assembly. However under excessive load, the gasket becomes more vulnerable to wear and even to dislocation. Therefore, there is a risk that the movable components fall apart and the water spills out of the container.

An objective of the present invention is to provide a check valve assembly which overcomes the aforementioned drawbacks of the prior art and which is easy to install and has an improved safety.

This objective has been achieved by the check valve assembly according to the present invention as defined in claim 1 and the laundry dryer according to the present invention as defined in claim 5. Further achievements have been attained by the subject-matters respectively defined in the dependent claims.

The check valve assembly of the present invention has a locking member which is detachably engaged with a leading end of a spring loaded shaft, which projects out of a valve opening of a valve body. The locking member abuts against the valve body at a vicinity of the valve opening and inhibits rearward movement of the shaft in a state where a sealing element arranged on the leading end of the shaft firmly closes the valve opening.

In an embodiment, the locking member and the leading end of the shaft configure a twist-lock mechanism.

The present invention also provides a laundry dryer. The laundry dryer of the present invention comprises two check valve assemblies. One of the check valve assemblies is leak-tightly attached to an inlet of a removable condense water tank. The other one of the check valve assemblies is leak-tightly attached to an outlet of a condense water duct.

The check valve assemblies are detachably and fluidly coupled in a state where the shafts are aligned to mutually push each other to respective positions at which the valve openings are both maintained open so that the condense water in the duct can flow into the tank via the flow passages of the check valve assemblies. When the tank is removed, the check valve assemblies are decoupled, the shafts remove rearward into the valve bodies and the valve openings are respectively closed by the sealing elements. The locking members respectively counteract the biasing force of the springs and protect the sealing elements from being damaged and the shafts from being dislodged.

In another embodiment, the valve bodies of the check valve assemblies are respectively provided with corresponding snap-fit portions which releasably hold them together. In this embodiment, the snap fit portions are released when a user pulls the tank out of the laundry dryer.

In another embodiment, the valve bodies are provided with additional snap-fit portions which allow them to be firmly connected to the condense water duct and the tank respectively

The laundry dryer to which the present invention has been applied is not limited to a particular technology. Thus, the check valve assemblies of the present invention can be utilized in a laundry dryer of a heat-pump type or a condenser type.

The present invention provides a check valve assembly which has an improved safety. By virtue of the locking member, the sealing element has been prevented from receiving excessive loads. Thereby, the sealing element has been protected from wearing out and a leak-tightness of the check valve assembly has been secured. In addition, the shaft has been prevented from completely dislodging out of the assembly even when the sealing element is damaged or an excessive load is acted on the assembly. Thereby, a proper functioning of the check valve assembly has been safeguarded and a spillage of the water out of the tank has been prevented. The locking member of the present invention is easy to install. Also, the locking member can be quickly and easily removed to service the check valve assembly.

Additional advantages of the check valve assembly of the present invention and the laundry dryer of the present invention will become apparent with the detailed description of the embodiments with reference to the accompanying drawings in which:
Figure 1 - is a schematic partial perspective view of a laundry dryer having a first check valve assembly and a second check valve assembly according to an embodiment of the present invention,
Figure 2 - is a schematic enlarged partial perspective view of the laundry dryer shown in Fig. 1,
Figure 3 - is a schematic exploded perspective view of the first check valve assembly according to an embodiment of the present invention,
Figure 4 - is a schematic exploded perspective view of the second check valve assembly according to an embodiment of the present invention,
Figure 5 - is a schematic perspective view of the first check valve assembly according to an embodiment of the present invention, prior to mounting the locking member,
Figure 6 - is a schematic perspective view of the second check valve assembly according to an embodiment of the present invention, prior to mounting the locking member,
Figure 7 - is a schematic perspective view of the first check valve assembly according to an embodiment of the present invention,
Figure 8 - is a schematic perspective view of the second check valve assembly according to an embodiment of the present invention,
Figure 9 - is a schematic enlarged front view of the second check valve assembly according to an embodiment of the present invention.

The reference signs appearing on the drawings relate to the following technical features.
1a. 1b. Check valve assembly
2. Laundry dryer (plastic casing)
3a. 3b. Body
4a. 4b. First opening
5a. 5b. Second opening
6a. 6b. Fluid passage
7a. 7b. Shaft
8a. 8b. Spring
9a. 9b. Leading end
10a. 10b. First seat
11a. 11b. Second seat
12a. 12b. First sealing element
13a. 13b. Locking member
14a. 14b. Radial protrusion
15a. 15b. Slot
16a. 16b. Annular groove
17. Tank
18. Inlet
19. Duct
20. Outlet
21. Second sealing element
22. Third sealing element
23. Fourth sealing element
24. First snap-fit portion
25. Wall portion
26. Second snap-fit portion
27. Third snap-fit portion

### C: Plastic casing of a laundry dryer

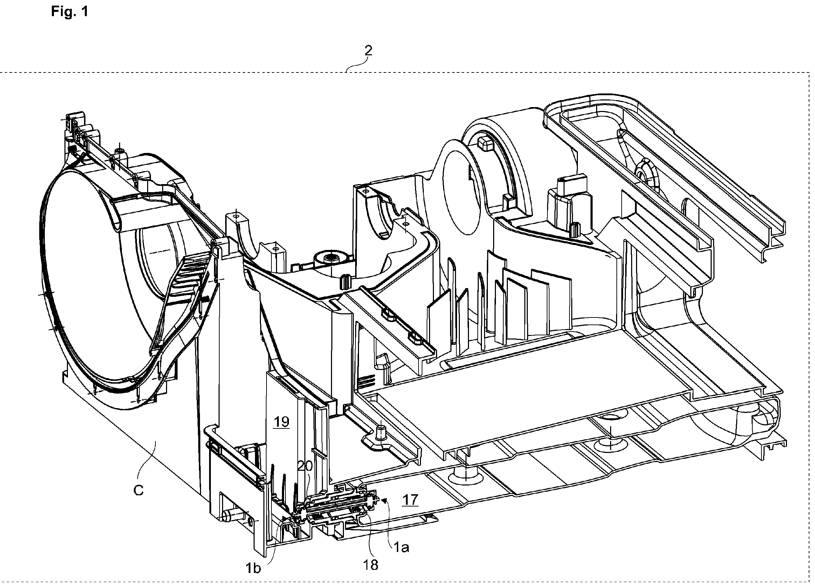

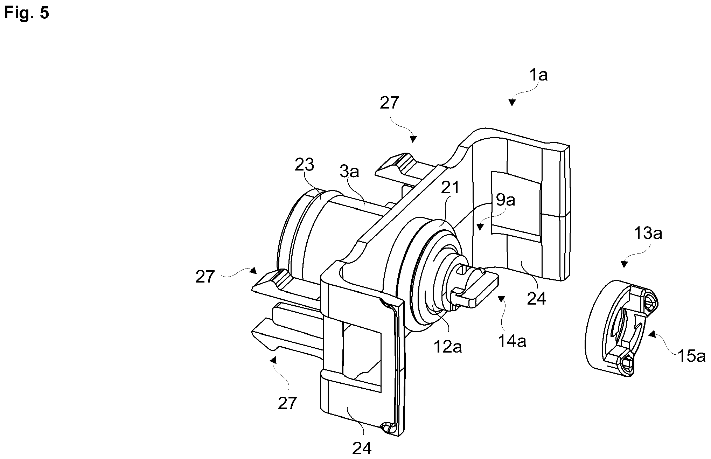

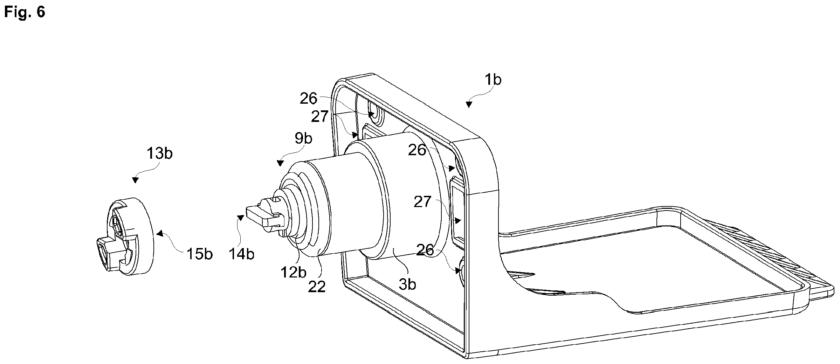

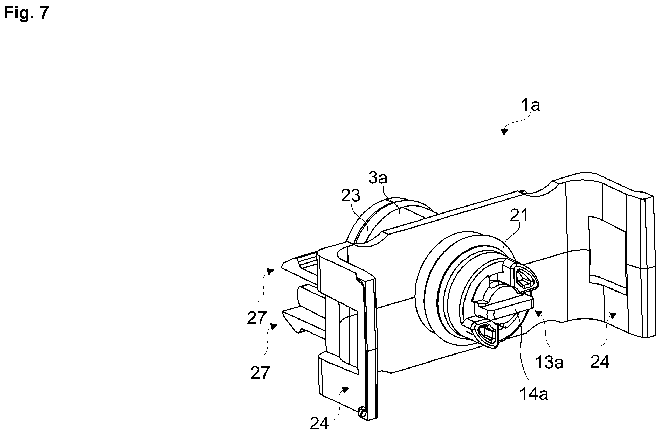

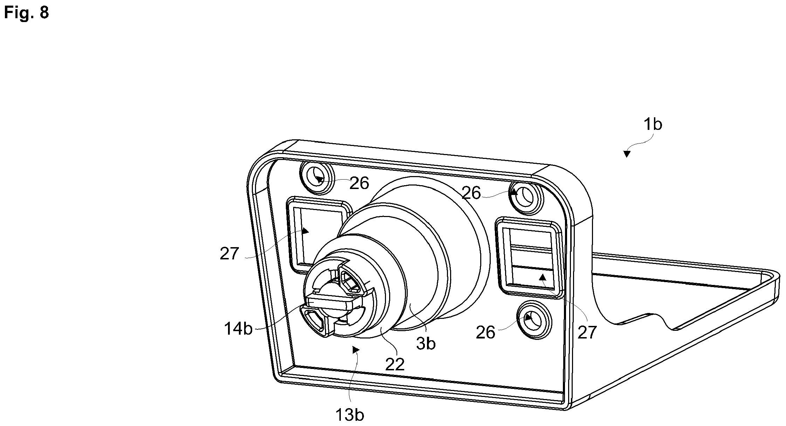

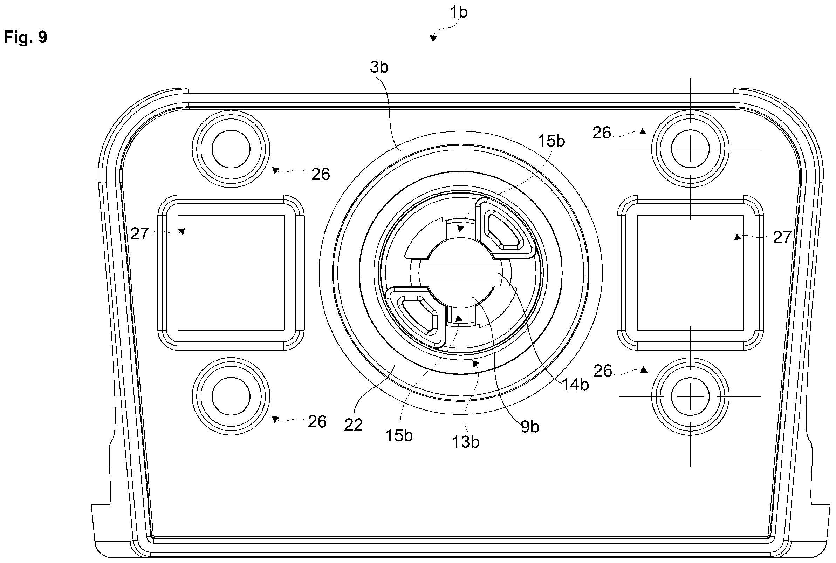

The check valve assembly (1a, 1b) is suitable for use in a laundry dryer (2). The check valve assembly (1a, 1b) of the present invention comprises a body (3a, 3b) which has a first opening (4a, 4b), a second opening (5a, 5b) and a fluid passage (6a, 6b) which is formed between the first opening (4a, 4b) and the second opening (5a, 5b), a shaft (7a, 7b) which is loaded by a spring (8a, 8b) and inserted through the second opening (5a, 5b) into the fluid passage (6a, 6b) until a leading end (9a, 9b) of the shaft (7a, 7b) projects out of the first opening (4a, 4b) and the spring (8a, 8b) is compressed between a first seat (10a, 10b) in the body (3a, 3b) and a second seat (11a, 11b) on the shaft (7a, 7b), an elastic first sealing element (12a, 12b) which is detachably attached to the leading end (9a, 9b) of the shaft (7a, 7b), wherein the first sealing element (12a, 12b) leak-tightly closes the first opening (4a, 4b) as the shaft (7a, 7b) is pushed rearward by the spring (8a, 8b), and a locking member (13a, 13b) which is detachably engaged with the leading end (9a, 9b) of the shaft (7a, 7b), wherein the locking member (13a, 13b) abuts against the body (3a, 3b) and inhibits rearward movement of the shaft (7a, 7b) in a state where the first sealing element (12a, 12b) firmly closes the first opening (4a, 4b) (Figs. 1 to 9).

In an embodiment, the locking member (13a, 13b) and the leading end (9a, 9b) of the shaft (7a, 7b) configure a twist-lock mechanism. In this embodiment, a radial protrusion (14a, 14b) formed on the leading end (9a, 9b) of the shaft (7a, 7b) is penetrated through a slot (15a, 15b) formed into the locking member (13a, 13b) (Figs. 1 to 9).

In another embodiment, the spring (8a, 8b) is a coil compression spring which is sleeved onto the shaft (7a, 7b) and abutted against the second seat (11a, 11b). In this embodiment, the second seat (11a, 11b) is radially formed around the shaft (7a, 7b) (Figs. 1 to 5).

In another embodiment, the first sealing element (12a, 12b) is an O-ring which is arranged into an annular groove (16a, 16b) formed around the leading end (9a, 9b) of the shaft (7a, 7b) (Figs. 1 to 6).

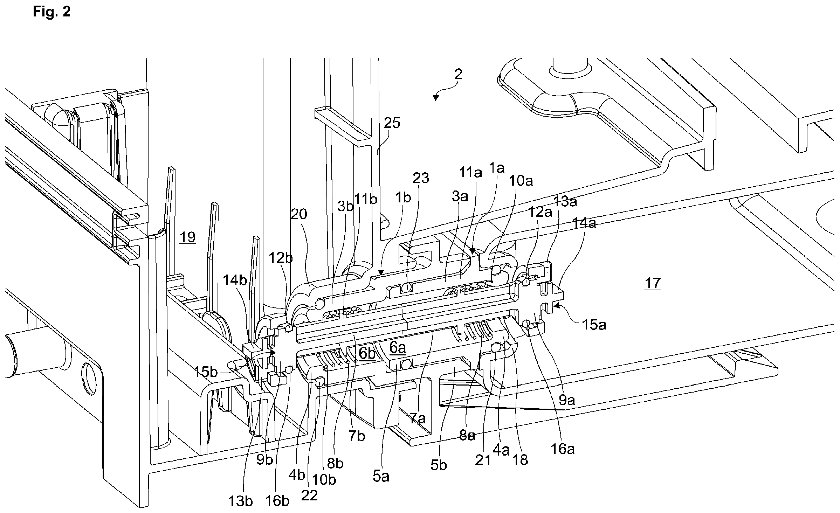

The present invention also provides a laundry dryer (2) which comprises a removable tank (17) for collecting condense water. The tank (17) has an inlet (18). The laundry dryer (2) further comprises a duct (19) for conveying condense water into the tank (17). The duct (19) has an outlet (20) (Figs. 1 and 2).

The laundry dryer (2) of the present invention comprises a first check valve assembly (1a) and a second check valve assembly (1b). The inlet (18) and the first opening (4a) of the first check valve assembly (1a) are configured to leak-tightly engage with each other via an elastic second sealing element (21). The outlet (20) and the first opening (4b) of the second check valve assembly (1b) are configured to leak-tightly engage with each other via an elastic third sealing element (22). The second opening (5a) of the first check valve assembly (1a) is releasably and leak-tightly engaged with a second opening (5b) of the second check valve assembly (1b) via a fourth sealing element (23) in a state where the shafts (7a, 7b) of the first check valve assembly (1a) and the second check valve assembly (1b) are aligned to mutually push each other to respective positions at which the first openings (4a, 4b) of the first check valve assembly (1a) and the second check valve (1b) assembly are both maintained open so that the condense water in the duct (19) can flow into the tank via the flow passages (6a, 6b) of the first check valve assembly (1a) and the second check valve assembly (1b) (Figs. 1 and 2).

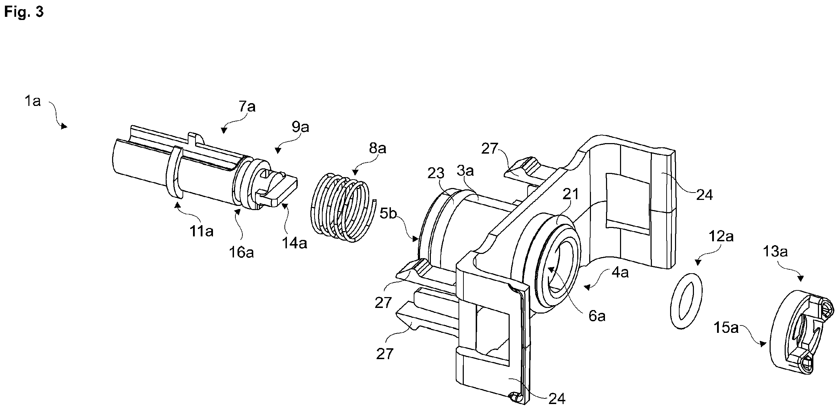

In another embodiment, the body (3a) of the first check valve assembly (1a) and the tank (17) are respectively provided with corresponding first snap-fit portions (24) (Figs. 3, 5 and 7).

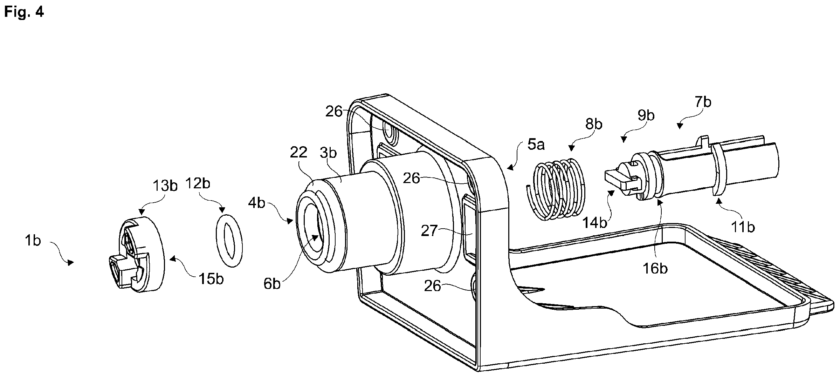

In another embodiment, the body (3b) of the second check valve assembly (1b) and a wall portion (25) of the duct (19) are respectively provided with corresponding second snap-fit portions (26) (Figs. 4, 6, 8 and 9).

In another embodiment, the bodies (3a, 3b) of the first check valve assembly (1a) and the second check valve assembly (1b) are each respectively provided with corresponding third snap-fit portions (27) which are configured to release when the tank (17) is manually removed by a user (Figs. 3 to 9).

In another embodiment, the second opening (5a) of the first check valve assembly (1a) is inserted into the second opening (5b) of the second check valve assembly (1b). In this embodiment, the fourth sealing element (23) is arranged at an interface between the second openings (5a, 5b).

By virtue of the locking member (13a, 13b), a safety of the check valve assembly (1a, 1b) has been improved. Thus, a user can safely remove the tank (17) and insert it after emptying. Any excessive forces generated during the removal are counteracted by the locking member (13a, 13b). Thereby, the first sealing elements (12a, 12b) are protected from being damaged and the leak-tightness is preserved. The movable parts, in particular the shafts (7a, 7b) are prevented from dislodging out of the bodies (3a, 3b). The locking members (13a, 13b) of the present invention can be easily demounted and remounted to service the check valve assemblies (1a, 1b).

## Claims

1. A check valve assembly (1a, 1b) for use in a laundry dryer (2) comprising:
- a body (3a, 3b) which has a first opening (4a, 4b), a second opening (5a, 5b) and a fluid passage (6a, 6b) which is formed between the first opening (4a, 4b) and the second opening (5a, 5b),
- a shaft (7a, 7b) which is loaded by a spring (8a, 8b) and inserted through the second opening (5a, 5b) into the fluid passage (6a, 6b) until a leading end (9a, 9b) of the shaft (7a, 7b) projects out of the first opening (4a, 4b) and the spring (8a, 8b) is compressed between a first seat (10a, 10b) in the body (3a, 3b) and a second seat (11a, 11b) on the shaft (7a, 7b),
- an elastic first sealing element (12a, 12b) which is detachably attached to the leading end (9a, 9b) of the shaft (7a, 7b), wherein the first sealing element (12a, 12b) leak-tightly closes the first opening (4a, 4b) as the shaft (7a, 7b) is pushed rearward by the spring (8a, 8b), **characterized by**:
- a locking member (13a, 13b) which is detachably engaged with the leading end (9a, 9b) of the shaft (7a,7b), wherein the locking member (13a, 13b) abuts against the body (3a, 3b) and inhibits rearward movement of the shaft (7a, 7b) in a state where the first sealing element (12a, 12b) firmly closes the first opening (4a, 4b).

2. The check valve assembly (1a, 1b) according to claim 1, **characterized in that** the locking member (13a, 13b) and the leading end (9a, 9b) of the shaft (7a, 7b) configure a twist-lock mechanism, wherein a radial protrusion (14a, 14b) which is formed on the leading end (9a, 9b) of the shaft (7a, 7b) is penetrated through a slot (15a, 15b) which is formed into the locking member (13a, 13b).

3. The check valve assembly (1a, 1b) according to claim 1 or 2, **characterized in that** the spring (8a, 8b) is a coil compression spring which is sleeved onto the shaft (7a, 7b) and abutted against the second seat (11a, 11b), wherein the second seat (11a, 11b) is radially formed around the shaft (7a, 7b).

4. The check valve assembly (1a, 1b) according to anyone of claims 1 to 3, **characterized in that** the first sealing element (12a, 12b) is an O-ring which is arranged into an annular groove (16a, 16b) formed around the leading end (9a, 9b) of the shaft (7a, 7b).

5. A laundry dryer (2) comprising
- a removable tank (17) for collecting condense water, wherein the tank (17) has an inlet (18) and
- a duct (19) for conveying condense water into the tank (17), wherein the duct (19) has an outlet (20),
**characterized in that**
- a first check valve assembly (1a) as defined in any one of claims 1 to 4, wherein the inlet (18) and the first opening (4a) of the first check valve assembly (1a) are configured to leak-tightly engage with each other via an elastic second sealing element (21),
- a second check valve assembly (1b) as defined in any one of claims 1 to 4, wherein the outlet (20) and the first opening (4b) of the second check valve assembly (1b) are configured to leak-tightly engage with each other via an elastic third sealing element (22),
wherein the second opening (5a) of the first check valve assembly (1a) is releasably and leak-tightly engaged with a second opening (5b) of the second check valve assembly (1b) via a fourth sealing element (23) in a state where the shafts (7a, 7b) of the first check valve assembly (1a) and the second check valve assembly (1b) are aligned to mutually push each other to respective positions at which the first openings (4a, 4b) of the first check valve assembly (1a) and the second check valve (1b) assembly are both maintained open.

6. The laundry dryer (2) according to claim 5, **characterized in that** the body (3a) of the first check valve assembly (1a) and the tank (17) are respectively provided with corresponding first snap-fit portions (24).

7. The laundry dryer (2) according to claim 5 or 6, **characterized in that** the body (3b) of the second check valve assembly (1b) and a wall portion (25) of the duct (19) are respectively provided with corresponding second snap-fit portions (26).

8. The laundry dryer (2) according to any one of claims 5 to 7, **characterized in that** the bodies (3a, 3b) of the first check valve assembly (1a) and the second check valve assembly (1b) are each respectively provided with corresponding third snap-fit portions (27) which are configured to release when the tank (17) is manually removed.

9. The laundry dryer (2) according to any one of claims 5 to 8, **characterized in that** the second opening (5a) of the first check valve assembly (1a) is inserted into the second opening (5b) of the second check valve assembly (1b), wherein the fourth sealing element (23) is arranged at an interface between the second openings (5a, 5b).

## Patentansprüche

1. Ein Rückschlagventilzusammenbau (1a, 1b) für Gebrauch in einem Wäschetrockner (2) bestehend aus:
- einem Körper (3a, 3b), die eine erste Öffnung (4a, 4b), eine zweite Öffnung (5a, 5b) und einen Flüssigkeitsdurchgang (6a, 6b) besitzt, der zwischen der ersten Öffnung (4a, 4b) und der zweiten Öffnung (5a, 5b) gebildet ist,
- einem Schaft (7a, 7b),der aufgeladen ist durch eine Feder (8a, 8b) und eingefügt durch die zweite Öffnung (5a, 5b) in den Flüssigkeitsdurchgang (6a, 6b) bis ein Führende (9a, 9b) des Schafts (7a, 7b) hervorragt aus der ersten Öffnung (4a, 4b) und die Feder (8a, 8b) ist zusammengedrückt zwischen einem ersten Sitz (10a, 10b) im Körper (3a, 3b) und einem zweiten Sitz (11a, 11b) auf dem Schaft (7a, 7b),
- ein elastisches erstes Dichtungselement (12a, 12b), das abtrennbar zugefügt istzum Führende (9a, 9b) des Schafts (7a, 7b), wo das erste Dichtungselement (12a, 12b) leckdicht schließt die erste Öffnung (4a, 4b) als der Schaft (7a, 7b) rückwärts hingeschoben ist von der Feder (8a, 8b), **dadurch gekennzeichnet, daß**:
- ein Verriegelungselement (13a, 13b), das abtrennbar eingeklinkt ist zum Führende (9a, 9b) des Schafts (7a,7b), wo das Verriegelungselement (13a, 13b) begrenzt gegen den Körper (3a, 3b) und sperrt rückwärtige Bewegung des Schafts (7a, 7b) in einem Zustand, wo das erste Dichtungselement (12a, 12b) fest verschließt die erste Öffnung (4a, 4b).

2. Der Rückschlagventilzusammenbau (1a, 1b) nach Anspruch 1, **dadurch gekennzeichnet, daß** das Verriegelungselement (13a, 13b) und Führende (9a, 9b) des Schafts (7a, 7b) konfiguriert einen Verdrehungssicherungsmechanismus, wo ein radialer Vorsprung (14a, 14b), derauf dem Führende (9a, 9b) des Schaft (7a, 7b) gebildet ist, durchgedrungen durch eine Spalte (15a, 15b), die ins Verriegelungselement (13a, 13b) gebildet ist.

3. Der Rückschlagventilzusammenbau (1a, 1b) nach Anspruch 1 oder 2, **dadurch gekennzeichnet, daß** die Feder (8a, 8b) eine zusammendrückendeSchraubenfeder ist, die geärmelt ist auf den Schaft (7a, 7b) und begrenzt gegen den zweiten Sitz (11a, 11b), wo der zweite Sitz (11a, 11b) radial um den Schaft (7a, 7b) gebildet ist.

4. Der Rückschlagventilzusammenbau (1a, 1b) nach den vorhergehenden Ansprüche 1 bis 3, **dadurch gekennzeichnet, daß** das erste Dichtungselement (12a, 12b) ein O-Ring ist, der geordnet ist in einen Ringkanal(16a, 16b), der um das Führende (9a, 9b) des Schafts (7a, 7b) gebildet ist.

5. Ein Wäschetrockner (2) bestehend aus
- einem entfernbaren Tank (17) für Einsammeln von Kondenswasser, wo der Tank (17) einen Eingang (18) hat und
- einer Führung (19) für Übertragung von Kondenswasser in den Tank (17), wo die Führung (19) einen Ausgang (20) hat,
**dadurch gekennzeichnet, daß**
- ein erster Rückschlagventilzusammenbau (1a), wie definiert ist nach den vorher-gehenden Ansprüche 1 bis 4, wo der Eingang (18) und die erste Öffnung (4a) des ersten Rückschlagventilzusammenbau (1a) konfiguriert sind zur leckdichtenEinklinkung miteinander durch ein elastisches zweites Dichtungselement (21),
- ein zweiter Rückschlagventilzusammenbau (1b), wie definiert ist nach den vorher-gehenden Ansprüche 1 bis 4, wo der Ausgang (20) und die erste Öffnung (4b) des zweiten Rückschlagventilzusammenbau (1b) konfiguriert sind zur leckdichtenEinklinkung miteinander durch ein elastisches drittes Dichtungselement (22),
wo die zweite Öffnung (5a) des ersten Rückschlagventilzusammenbau (1a) ablösbar und leckdichteingeklinkt sind mit einer zweiten Öffnung (5b) des zweiten Rückschlagventil-zusammenbau (1b) durch ein viertes Dichtungselement (23) in einem Zustand, wo die Schafte (7a, 7b) des ersten Rückschlagventilzusammenbau (1a) und zweiten Rückschlagventil-zusammenbau (1b) in Linie gebracht sind, sodaß sie gegenseitig anschieben zur betreffenden Positionen, wo erste Öffnungen (4a, 4b) des ersten Rückschlagventilzusammenbau (1a) und des zweiten Rückschlagventils (1b) zusammen offen beibehalten werden.

6. Der Wäschetrockner (2) nach Anspruch 5, **dadurch gekennzeichnet, daß** der Körper (3a) des ersten Rückschlagventilzusammenbau (1a) und der Tank (17) jeweilig mit entsprechenden Knack-Fit Teile (24) ausgestattet sind.

7. Der Wäschetrockner (2) nach Anspruch 5 oder 6, **dadurch gekennzeichnet, daß** der Körper (3b) des zweiten Rückschlagventilzusammenbau (1b) und ein Wandteil (25) der Führung (19) jeweilig mit entsprechenden zweiten Knack-Fit Teile (26) ausgestattet sind.

8. Der Wäschetrockner (2) nach den vorhergehenden Ansprüche 5 bis 7, **dadurch gekennzeichnet, daß** die Körper (3a, 3b) des ersten Rückschlagventilzusammenbau (1a) und des zweiten Rückschlagventilzusammenbau (1b) jeweilig mit entsprechenden dritten Knack-Fit Teile (27) ausgestattet sind, die zur Freilassung konfiguriert sind, wenn der Tank (17) manuell entfernt ist.

9. Der Wäschetrockner (2) nach den vorhergehenden Ansprüche 5 bis 8, **dadurch gekennzeichnet, daß** die zweite Öffnung (5a) des ersten Rückschlagventilzusammenbau (1a) eingefügt ist in die zweite Öffnung (5b) des zweiten Rückschlagventilzusammenbau (1b), wo das vierte Dichtungselement (23) angeordnet ist an einer Schnittstelle zwischen den zweiten Öffnungen (5a, 5b).

## Revendications

1. Ensemble de clapet anti-retour (1a, 1b) destiné à être utilisé dans un séchoir à linge (2) -comprenant:
- un corps (3a, 3b) qui présente une première ouverture (4a, 4b), une seconde ouverture (5a, 5b) et un passage de fluide (6a, 6b) qui est formé entre la première ouverture (4a, 4b) et la deuxième ouverture (5a, 5b),
- un arbre (7a, 7b) chargé par un ressort (8a, 8b) et inséré à travers la seconde ouverture (5a, 5b) dans le passage de fluide (6a, 6b) jusqu'à ce qu'une extrémité avant (9a, 9b) de l'arbre (7a, 7b) sort de la première ouverture (4a, 4b) et le ressort (8a, 8b) est comprimé entre un premier siège (10a, 10b) dans le corps (3a, 3b) et un second siège (11a, 11b) sur l'arbre (7a, 7b),
- un premier élément d'étanchéité élastique (12a, 12b) qui est fixé de manière amovible à l'extrémité avant (9a, 9b) de l'arbre (7a, 7b), dans lequel le premier élément d'étanchéité (12a, 12b) ferme hermétiquement la première ouverture (4a, 4b) lorsque l'arbre (7a, 7b) est poussé vers l'arrière par le ressort (8a, 8b), **caractérisé par:**
- un élément de verrouillage (13a, 13b) qui est engagé de manière amovible avec l'extrémité avant (9a, 9b) de l'arbre (7a, 7b), dans lequel l'élément de verrouillage (13a, 13b) bute contre le corps (3a, 3b) et inhibe déplacement vers l'arrière de l'arbre (7a, 7b) dans un état où le premier élément d'étanchéité (12a, 12b) ferme fermement la première ouverture (4a, 4b).

2. Ensemble de clapet anti-retour (1a, 1b) selon la revendication 1, **caractérisé en ce que** l'élément de verrouillage (13a, 13b) et l'extrémité avant (9a, 9b) de l'arbre (7a, 7b) configurent un mécanisme de verrou tournant, dans lequel une protubérance radiale (14a, 14b) qui est formée sur l'extrémité avant (9a, 9b) de l'arbre (7a, 7b) est pénétrée dans une fente (15a, 15b) qui est formée dans l'élément de verrouillage (13a, 13b).

3. Ensemble de clapet anti-retour (1a, 1b) selon la revendication 1 ou 2, **caractérisé en ce que** le ressort (8a, 8b) est un ressort de compression de bobine qui est moulé sur l'arbre (7a, 7b) et coopérant contre la deuxième siège (11a , 11b), dans lequel la deuxième siège (11a, 11b) est formée radialement autour de l'arbre (7a, 7b).

4. Ensemble de clapet anti-retour (1a, 1b) selon l'une quelconque des revendications 1 à 3, **caractérisé en ce que** le premier élément d'étanchéité (12a, 12b) est un joint torique qui est agencé dans une rainure annulaire (16a, 16b) formée autour de l'extrémité avant (9a, 9b) de l'arbre (7a, 7b).

5. Séchoir à linge (2) comprenant:
- un réservoir amovible (17) pour collecter de l'eau de condensation, dans lequel le réservoir (17) a une entrée (18) et
- un conduit (19) pour transporter de l'eau condensée dans le réservoir (17), dans lequel le conduit (19) présente une sortie (20)
**caractérisé en ce que**
- un premier ensemble de clapet anti-retour (1a) tel que défini dans l'une quelconque des revendications 1 à 4, dans lequel l'entrée (18) et la première ouverture (4a) du premier ensemble de clapet anti-retour (1a) sont configurées pour s'engager de manière étanche avec chacun autre via un second élément d'étanchéité élastique (21),
- un deuxième ensemble de clapet anti-retour (1b) tel que défini dans l'une quelconque des revendications 1 à 4, dans lequel la sortie (20) et la première ouverture (4b) du second ensemble de soupape de retenue (1b) sont configurées pour s'engager de manière étanche avec chacun autre via un troisième élément d'étanchéité élastique (22), dans lequel la seconde ouverture (5a) du premier ensemble de clapet anti-retour (1a) est relâchée et engagée de manière étanche avec une seconde ouverture (5b) du second ensemble de clapet anti-retour (1b) par l'intermédiaire d'un quatrième élément d'étanchéité (23) dans un état où les arbres (7a, 7b) du premier ensemble de clapet anti-retour (1a) et le second ensemble de clapet anti-retour (1b) sont alignés pour se pousser mutuellement vers des positions respectives auxquelles les premières ouvertures (4a, 4b) du premier ensemble de clapet anti-retour (1a) et le deuxième ensemble de clapet anti-retour (1b) sont tous deux maintenus ouverts.

6. Séchoir à linge (2) selon la revendication 5, **caractérisé en ce que** le corps (3a) du premier ensemble de clapet anti-retour (1a) et le réservoir (17) sont respectivement pourvus de premières parties d'encliquetage correspondantes (24).

7. Séchoir à linge (2) selon la revendication 5 ou 6, **caractérisé en ce que** le corps (3b) du second ensemble de clapet anti-retour (1b) et une partie de paroi (25) du conduit (19) sont respectivement pourvus du seconds parties d'encliquetage correspondantes (26).

8. Séchoir à linge (2) selon l'une quelconque des revendications 5 à 7, **caractérisé en ce que** les corps (3a, 3b) du premier ensemble de clapet anti-retour (1a) et le second ensemble de clapet anti-retour (1b) sont respectivement pourvus des troisièmes parties à encliquetage correspondants (27) qui sont configurées pour libérer lorsque le réservoir (17) est retiré manuellement.

9. Séchoir à linge (2) selon l'une quelconque des revendications 5 à 8, **caractérisé en ce que** la deuxième ouverture (5a) du premier ensemble de clapet anti-retour (1a) est insérée dans la deuxième ouverture (5b) du second ensemble de clapet anti-retour (1b), dans lequel le quatrième élément d'étanchéité (23) est agencé à une interface entre les deuxièmes ouvertures (5a, 5b).
